# FASCICULE DE BREVET EUROPEEN

(11) **EP 0 813 012 B1**
(45) Date de publication et mention de la délivrance du brevet: **02.08.2000**
(21) Numéro de dépôt: 97401293.2
(22) Date de dépôt: 09.06.1997
(51) Int. Cl.: F16L 3/26, H02G 3/04, H02G 3/30

(54) **Support de câbles électriques et chemin de câbles comportant de tels supports**
Elektrischer Kabelträger und Kabelrinne mit solchen Trägern
Electrical cable support and cable duct with such supports

(30) Priorité: 12.06.1996 FR 9607308
(43) Date de publication de la demande: 17.12.1997
(73) Titulaire: Société de Constructions Electriques de la Seine ( CES), 92130 Issy-les-Moulineaux (FR)
(72) Inventeur: Harmand, Jean-Loup, 72120 Saint-Calais (FR)
(74) Mandataire: Burbaud, Eric

(56) Documents cités:
- FR-A- 2 138 092
- FR-A- 2 613 550

## Description

La présente invention est relative aux supports de câbles électriques et aux chemins de câbles comportant de tels supports.

Selon une première forme de réalisation, l'invention consiste en un support pour attacher des câbles électriques au moyen de colliers de serrage, ce support étant constitué par une tôle pliée et découpée qui comprend au moins :
- une paroi de fixation qui présente une sous-face destinée à être fixée sur une surface d'appui,
- et une portion d'accrochage comportant une pluralité de fentes juxtaposées qui sont destinées à recevoir les colliers de serrage et qui sont orientées selon une même direction longitudinale, la portion d'accrochage étant reliée à la paroi de fixation par une portion coudée forment un ressaut.

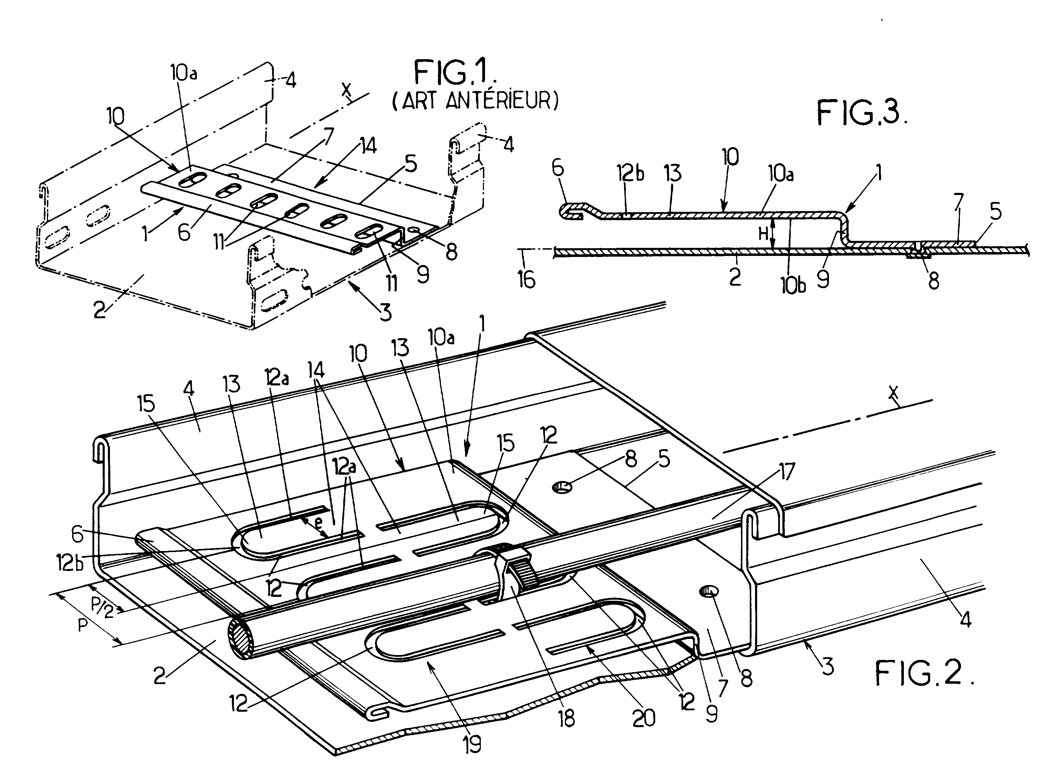

Des supports de câbles de ce type, tels que celui représenté sur la figure 1 ci-jointe sont commercialisés par la société CONSTRUCTIONS ELECTRIQUES DE LA SEINE-CES, 26 rue J.B. Potin, 92134 ISSY LES MOULINEAUX, France, sous la marque "ZPS".

Ces supports connus donnent satisfaction, mais ils présentent néanmoins les inconvénients suivants :
- pour passer les colliers de serrage dans les évidements de la portion d'accrochage, l'opérateur doit d'abord engager une extrémité du collier de serrage dans l'un de ces trous oblongs, à partir de la face de réception de la portion d'accrochage, puis accéder à la sous-face de cette portion d'accrochage, puis guider en aveugle l'extrémité du collier de serrage de façon à la faire ressortir par un trou oblong voisin, ce qui est long et fastidieux,
- et, du fait qu'il est nécessaire pour l'opérateur d'accéder à la sous-face de la portion d'accrochage du support afin de fixer les colliers de serrage, la hauteur libre au-dessous de cette portion d'accrochage doit être assez grande, ce qui peut engendrer une perte de place relativement importante.

La présente invention a notamment pour but de pallier ces inconvénients.

A cet effet, selon l'invention, un support du genre en question est caractérisé en ce que les fentes présentant chacune sensiblement une forme de U, avec deux branches latérales sensiblement rectilignes reliées entre elles par un tronçon courbe, les deux branches latérales de chaque fente s'étendant sensiblement parallèlement à la direction longitudinale, chaque fente délimitant ainsi un doigt d'accrochage qui s'étend sensiblement parallèlement à la direction longitudinale entre une première extrémité éloignée du tronçon courbe de la fente en U et une deuxième extrémité au niveau dudit tronçon courbe.

Grâce à ces dispositions, chaque collier de serrage peut être mis en place sur le support simplement par un mouvement tournant, en passant dans le tronçon courbe d'une fente en U de la portion d'accrochage.

Ainsi, au cours de la mise en place des colliers de serrage, l'opérateur n'a plus besoin d'accéder sous la portion d'accrochage du support, de sorte que d'une part, la mise en place des colliers de serrage est facilitée et d'autre part, le support peut le cas échéant présenter un encombrement en hauteur réduit par rapport aux supports de l'art antérieur.

Après serrage du collier sur le doigt d'accrochage correspondant et sur un ou plusieurs câbles, ce collier ne se déplace qu'en translation : il est donc bloqué par le tronçon courbe de la fente en U vers la deuxième extrémité du doigt d'accrochage, de sorte qu'il ne peut plus se dégager dudit doigt d'accrochage.

Dans des modes de réalisation préférés de la première forme de réalisation de l'invention, on peut éventuellement avoir recours en outre à l'une et/ou à l'autre des dispositions suivantes :
- la portion d'accrochage et la paroi de fixation s'étendent parallèlement à la direction longitudinale, la portion d'accrochage présentant une sous-face qui est située à une certaine hauteur au-dessus d'une ligne droite dite ligne de base, parallèle à la direction longitudinale et passant par la sous-face de la paroi de fixation ;
- la portion d'accrochage s'étend à l'opposé de la paroi de fixation à partir de la portion coudée ;
- la hauteur entre la sous-face de la portion d'accrochage et la ligne de base est inférieure à 1 cm.

Par ailleurs, la première forme de réalisation de l'invention a également pour objet un chemin de câbles comportant d'une part un profilé à section en U qui présente un fond et deux parois latérales longitudinales formant une rigole, et d'autre part une pluralité de supports tels que définis ci-dessus disposés à l'intérieur de la rigole, la paroi de fixation de chacun de ces supports étant fixée au fond du profilé.

Dans une deuxième forme de réalisation de l'invention, le support de câble peut consister en un profilé à section en U qui s'étend selon une direction longitudinale et qui présente un fond et deux parois latérales longitudinales, au moins le fond du profilé comprenant une pluralité de fentes juxtaposées qui sont destinées à recevoir les colliers de serrage et qui sont orientées selon la direction longitudinale, les fentes présentant chacune sensiblement une forme de U, avec deux branches latérales sensiblement rectilignes reliées entre elles par un tronçon courbe, les deux branches latérales de chaque fente s'étendant sensiblement parallèlement à la direction longitudinale, chaque fente délimitant ainsi un doigt d'accrochage qui s'étend sensiblement parallèlement à la direction longitudinale entre une première extrémité éloignée du tronçon courbe de la fente en U et une deuxième extrémité au niveau dudit tronçon courbe.

Ce profilé peut comporter, en plus des fentes en U, des trous oblongs juxtaposés qui s'étendent parallèlement à la direction longitudinale.

Enfin, dans les deux formes de réalisation du support selon l'invention, on peut éventuellement avoir recours en outre à l'une et/ou à l'autre des dispositions suivantes :
- chaque doigt d'accrochage présente une largeur qui, mesurée perpendiculairement à la direction longitudinale, est comprise entre 0,5 et 2 cm, les fentes en U présentant chacune une largeur comprise entre 2 et 5 mm ;
- les fentes et les doigts d'accrochage correspondants sont répartis en au moins un groupe de rangées comprenant des première et deuxième rangées transversales contiguës, les doigts d'accrochage des deux rangées du même groupe s'étendant depuis leur première extrémité vers leur deuxième extrémité à l'opposé de l'autre de ces deux rangées, et les doigts d'accrochage de la première rangée étant décalés par rapport aux doigts d'accrochage de la deuxième rangée, selon une direction transversale perpendiculaire à la direction longitudinale ;
- les doigts d'accrochage de chaque rangée sont disposés à intervalles réguliers selon la direction transversale, avec un pas P, ces doigts d'accrochage étant décalés d'une distance P/2 d'une rangée à l'autre ;

D'autres caractéristiques et avantages de l'invention apparaîtront au cours de la description suivante de deux de ses formes de réalisation, données à titre d'exemples, en regard des dessins joints.

Sur les dessins :
- le figure 1 est une vue en perspective d'un chemin de câbles incluant un support de câbles électriques de l'art antérieur,
- la figure 2 est une vue en perspective d'un chemin de câbles incluant un support de câbles électriques selon une première forme de réalisation de l'invention,
- la figure 3 est une vue en coupe longitudinale du chemin de câbles de la figure 2,
- et la figure 4 est une vue en perspective d'un support de câbles électriques selon une deuxième forme de réalisation, constituant par lui-même un chemin de câbles.

Sur les différentes figures, les mêmes références désignent des éléments identiques ou similaires.

La première forme de réalisation de l'invention concerne, de façon générale, les supports 1 de câbles électriques du genre de celui, connu en soi, qui est représenté sur la figure 1 et qui est commercialisé sous la marque "ZPS" par la Société Constructions Electriques de la Seine.

Ces supports 1 peuvent être fixés sur toute surface d'appui rigide, par exemple sur un mur, ou encore sur le fond 2 d'un profilé métallique 3 à section en U qui présente par ailleurs deux parois latérales 4. Ces deux parois latérales 4 délimitent avec le fond 2 une rigole qui peut être le cas échéant recouverte par un couvercle et qui est destinée à recevoir des câbles électriques s'étendant selon une direction longitudinale X.

Le support de câble 1 est constitué par une tôle pliée et découpée, réalisée par exemple en acier galvanisé d'une épaisseur de 0,8 à 2 mm. Ce support 1 s'étend selon la direction longitudinale X entre, d'une part, un bord arrière 5 perpendiculaire à la direction X et, d'autre part, un bord avant 6 roulé, lui-même perpendiculaire à la direction X.

Plus précisément, le support 1 comprend :
- une paroi de fixation plane 7 qui est fixée sur le fond 2 du chemin de câble par des poinçonnages partiels 8 constituant chacun un rivetage dit "autorivetage", ou encore par soudure, par vissage, ou autres, cette paroi de fixation 7 s'étendant selon la direction longitudinale X depuis le bord arrière 5 jusqu'à une portion coudée 9 formant un ressaut,
- et une paroi d'accrochage 10 de forme générale plane et parallèle à la paroi de fixation 7, cette paroi d'accrochage 10 s'étendant parallèlement à la direction longitudinale X à l'opposé de la paroi de fixation 7, depuis la portion coudée 9 jusqu'au bord avant 6.

Afin de pouvoir attacher des câbles électriques sur la face "supérieure" 10a de la paroi de fixation 10 au moyen de colliers de serrage, cette paroi de fixation présente une pluralité de trous oblongs 11 juxtaposés qui s'étendent chacun selon la direction longitudinale X.

De plus, afin de permettre à un opérateur de glisser son doigt sous la paroi de fixation 10 lors du passage des colliers de serrage dans les trous oblongs 11, la sous-face de la paroi de fixation est située à une hauteur relativement importante au-dessus du fond 2 du chemin de câbles, cette hauteur étant par exemple supérieure à 2 cm.

Comme représenté sur les figures 2 et 3, afin d'éviter que les opérateurs aient à glisser leurs doigts sous la paroi de fixation 10 lors de la mise en place des colliers de serrage, la première forme de réalisation de l'invention prévoit de remplacer les trous oblongs 11 par des fentes 12 en forme de U, de préférence toutes identiques.

Chacune de ces fentes 12 présente deux branches latérales 12a sensiblement rectilignes reliées entre elles par un tronçon courbe 12b en arc-de-cercle.

Les deux branches latérales 12a de chaque fente s'étendent sensiblement parallèlement à la direction longitudinale X, de sorte que chaque fente 12 délimite un doigt d'accrochage 13 qui s'étend lui-même sensiblement parallèlement à la direction longitudinale X entre une première extrémité 14 éloignée du tronçon courbe 12b et une deuxième extrémité 15 ou extrémité libre, au niveau dudit tronçon courbe.

De préférence, chaque fente 12 présente une largeur comprise entre 2 et 5 mm, et chaque doigt d'accrochage 13 présente lui-même une largeur e qui, mesurée perpendiculairement à la direction longitudinale X, est comprise entre 0,5 et 2 cm.

Grâce à ces dispositions, lorsqu'il est nécessaire de fixer un ou plusieurs câbles 17 sur le support 1 au moyen d'un collier de serrage 18, on plie ce collier de façon qu'il présente une zone courbe, et l'on engage ladite zone courbe sous l'un des doigts d'accrochage 13, en faisant pénétrer cette zone courbe du collier dans le tronçon courbe 12b de la fente en U correspondante.

Une fois le collier de serrage 18 passé sous les doigts d'accrochage 13, on serre ce collier sur le ou les câbles 17 et le doigt 13.

Après cette opération de serrage, le collier 18 peut tout au plus se déplacer en translation axiale par la direction X, de sorte que ce collier ne peut pas se dégager du doigt d'accrochage 13 correspondant dans la mesure où il ne peut plus subir un mouvement de rotation qui lui permettrait de sortir de la fente 12 par la portion courbe 12b de cette fente.

Du fait que l'opérateur chargé de mettre en place le collier de serrage 18 n'a plus à glisser ses doigts sous la paroi d'accrochage 10, la hauteur H entre la sous-face 10b de cette paroi d'accrochage et la ligne de base 16 correspondant au fond 2 du chemin de câble peut être réduite à une valeur généralement inférieure à 1 cm, et avantageusement de l'ordre de 6 mm.

De préférence, comme représenté sur la figure 2, les fentes 12 du support 1 sont réparties en deux rangées transversales 19, 20 et sont disposées de façon que les doigts 13 correspondant à la rangée 20 soient décalés par rapport au doigt d'accrochage 13 correspondant à la rangée 19, dans une direction transversale Y perpendiculaire à la direction X et parallèle au fond 2 du profilé.

Plus exactement, les doigts d'accrochage 13 de chaque rangée 19, 20 sont disposés à intervalles réguliers dans la direction transversale Y, selon un pas constant P mesurant par exemple entre 1 et 4 cm, et, d'une rangée à l'autre, les doigts d'accrochage 13 sont décalés d'une distance P/2 selon la direction transversale Y.

De plus, les doigts d'accrochage 13 de chaque rangée 19, 20 s'étendent de préférence à l'opposé de l'autre des rangées 19, 20, depuis leur première extrémité 14 vers leur deuxième extrémité 15, ce qui peut faciliter la mise en place des colliers de serrage 18 sur les doigts d'accrochage 13, lorsque des câbles 17 ont déjà été mis en place sur le support 1.

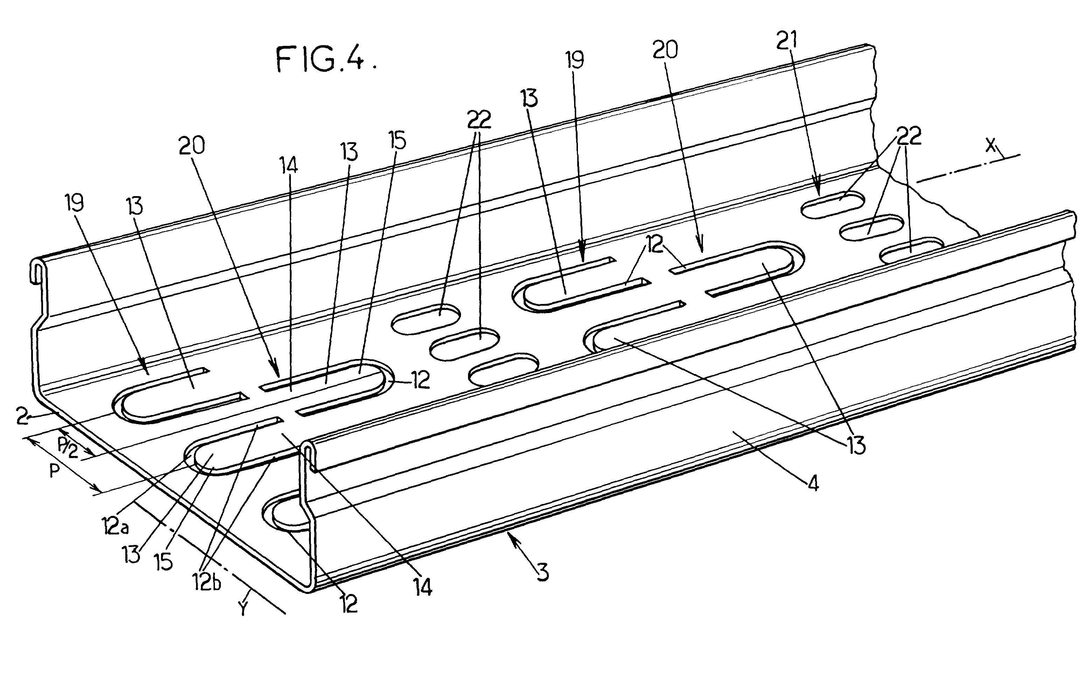

Dans la deuxième forme de réalisation de l'invention représentée sur la figure 4, le support de câble est constitué par le profilé 3 lui-même, qui est similaire au profilé déjà décrit précédemment, à ceci près que les fentes 12 sont ménagées dans le fond 2 de ce profilé.

Les fentes 12 sont similaires à celles déjà décrites et elles sont de préférence réparties en groupe de deux rangées transversales contiguës 19, 20 comme dans la forme de réalisation des figures 2 et 3 : la forme des fentes 12 et des doigts d'accrochage 13, ainsi que leur disposition dans les rangées transversales 19, 20, ne seront donc pas décrites en détail ici.

Les groupes de deux rangées transversales 19, 20 sont répétés à intervalles réguliers sur la longueur du profilé 3, ces groupes de rangées 19, 20 pouvant être éventuellement séparés les uns des autres par une ou plusieurs rangées 21, de trous oblongs 22 s'étendant chacun parallèlement à la direction longitudinale X.

## Revendications

1. Support (1) pour attacher des câbles électriques (17) au moyen de colliers de serrage (18), ce support étant constitué par une tôle pliée et découpée qui comprend au moins :
- une paroi de fixation (7) qui présente une sous-face (10b) destinée à être fixée sur une surface d'appui,
- et une portion d'accrochage (10) comportant une pluralité de fentes juxtaposées (12) qui sont destinées à recevoir les colliers de serrage et qui sont orientées selon une même direction longitudinale (X), la portion d'accrochage (10) étant reliée à la paroi de fixation (7) par une portion coudée (9) forment un ressaut,
les fentes (12) présentant chacune sensiblement une forme de U, avec deux branches latérales (12a) sensiblement rectilignes reliées entre elles par un tronçon courbe (12b), les deux branches latérales de chaque fente s'étendant sensiblement parallèlement à la direction longitudinale (X), chaque fente délimitant ainsi un doigt d'accrochage (13) qui s'étend sensiblement parallèlement à la direction longitudinale (X) entre une première extrémité (14) éloignée du tronçon courbe (12b) de la fente en U et une deuxième extrémité (15) au niveau dudit tronçon courbe.

2. Support (1) selon la revendication 1, dans lequel la portion d'accrochage (10) et la paroi de fixation (7) s'étendent parallèlement à la direction longitudinale (X), la portion d'accrochage présentant une sous-face (10b) qui est située à une certaine hauteur (H) au-dessus d'une ligne droite (16) dite ligne de base, parallèle à la direction longitudinale (X) et passant par la sous-face de la paroi de fixation (7).

3. Support selon la revendication 2, dans lequel la portion d'accrochage (10) s'étend à l'opposé de la paroi de fixation (7) à partir de la portion coudée (9).

4. Support selon l'une quelconque des revendications 2 et 3, dans lequel la hauteur (H) entre la sous-face (10b) de la portion d'accrochage et la ligne de base est inférieure à 1 cm.

5. Support pour attacher des câbles électriques (17) au moyen de colliers de serrage, consistant en un profilé (3) à section en U qui s'étend selon une direction longitudinale (X) et qui présente un fond (2) et deux parois latérales longitudinales (4), au moins le fond (2) du profilé comprenant une pluralité de fentes juxtaposées (12) qui sont destinées à recevoir les colliers de serrage et qui sont orientées selon la direction longitudinale, les fentes (12) présentant chacune sensiblement une forme de U, avec deux branches latérales (12a) sensiblement rectilignes reliées entre elles par un tronçon courbe (12b), les deux branches latérales de chaque fente s'étendant sensiblement parallèlement à la direction longitudinale (X), chaque fente délimitant ainsi un doigt d'accrochage (13) qui s'étend sensiblement parallèlement à la direction longitudinale (X) entre une première extrémité (14) éloignée du tronçon courbe (12b) de la fente en U et une deuxième extrémité (15) au niveau dudit tronçon courbe.

6. Support selon la revendication 5, dans lequel le fond (2) du profilé comporte, en plus des fentes (12) en U, des trous oblongs (22) juxtaposés qui s'étendent parallèlement à la direction longitudinale (X).

7. Support selon l'une quelconque des revendications précédentes, dans lequel chaque doigt d'accrochage (13) présente une largeur (e) qui, mesurée perpendiculairement à la direction longitudinale (X), est comprise entre 0,5 et 2 cm, les fentes (12) en U présentant chacune une largeur comprise entre 2 et 5 mm.

8. Support selon l'une quelconque des revendications précédentes, dans lequel les fentes (12) et les doigts d'accrochage (13) correspondants sont répartis en au moins un groupe de rangées comprenant des première et deuxième rangées transversales contiguës (19, 20), les doigts d'accrochage (13) des deux rangées du même groupe s'étendant depuis leur première extrémité (14) vers leur deuxième extrémité (15) à l'opposé de l'autre de ces deux rangées, et les doigts d'accrochage de la première rangée étant décalés par rapport aux doigts d'accrochage de la deuxième rangée, selon une direction transversale (Y) perpendiculaire à la direction longitudinale (X).

9. Support selon la revendication 8, dans lequel les doigts d'accrochage (13) de chaque rangée (19, 20) sont disposés à intervalles réguliers selon la direction transversale (Y), avec un pas P, ces doigts d'accrochage étant décalés d'une distance P/2 d'une rangée à l'autre.

10. Chemin de câbles comportant, d'une part, un profilé (3) à section en U qui présente un fond (2) et deux parois latérales longitudinales (4) formant une rigole, et d'autre part, une pluralité de supports (1) selon l'une quelconque des revendications 1 à 4, disposés à l'intérieur de la rigole, la paroi de fixation (7) de chacun de ces supports étant fixée au fond (2) du profilé.

## Patentansprüche

1. Kabelträger (1) zur Anbringung elektrischer Kabel (17) mittels Kabelbindern (18), wobei dieser Träger aus einem gefalzten und zugeschnittenen Blech besteht, das wenigstens aufweist:
- einer Befestigungswand (7) mit einer Unterseite (10b), die dazu vorgesehen ist, auf einer Auflagefläche befestigt zu werden,
- und einen Einhängabschnitt (10), der mehrere nebeneinander liegende Schlitze (12) aufweist, die dazu vorgesehen sind, die Kabelbinder aufzunehmen, und die in der gleichen Längsrichtung (X) ausgerichtet sind, wobei der Einhängabschnitt (10) durch einen abgewinkelten Abschnitt (9), der einen Absatz bildet, mit der Befestigungswand (7) verbunden ist,
wobei die Schlitze (12) jeweils im wesentlichen U-förmig sind, wobei zwei im wesentlichen geradlinige Seitenarme (12a) durch ein gebogenes Teilstück (12b) miteinander verbunden sind und die beiden Seitenarme jedes Schlitzes sich im wesentlichen parallel zur Längsrichtung (X) erstrecken, wobei jeder Schlitz auf diese Weise einen Einhängefinger (13) abgrenzt, der sich zwischen einem ersten Ende (14), das von dem gebogenen Teilstück (12b) des U-förmigen Schlitzes entfernt liegt, und einem zweiten Ende (15) im Bereich dieses gebogenen Teilstücks im wesentlichen parallel zur Längsrichtung (X) erstreckt.

2. Kabelträger (1) nach Anspruch 1, bei dem der Einhängabschnitt (10) und die Befestigungswand (7) sich parallel zur Längsrichtung (X) erstrecken, wobei der Einhängabschnitt eine Unterseite (10b) aufweist, die sich in einer bestimmten Höhe (H) über einer geraden Linie (16) befindet, der sogenannten Basislinie, die sich parallel zur Längsrichtung (X) erstreckt und in Höhe der Unterseite der Befestigungswand (7) verläuft.

3. Kabelträger (1) nach Anspruch 2, bei dem sich der Einhängabschnitt (10) von dem abgewinkelten Abschnitt (9) aus von der Befestigungswand (7) weg erstreckt.

4. Kabelträger (1) nach einem der Ansprüche 2 und 3, bei dem die Höhe (H) zwischen der Unterseite (lOb) des Einhängabschnitts (10) und der Basislinie kleiner als 1 cm ist.

5. Kabelträger zur Anbringung elektrischer Kabel (17) mittels Kabelbindern, bestehend aus einem Profilteil (3) mit U-förmigem Querschnitt, das sich in einer Längsrichtung (X) erstreckt und einen Boden (2) und zwei Längsseitenwände (4) aufweist, wobei mindestens der Boden (2) des Profilteils mehrere nebeneinander liegende Schlitze (12) aufweist, die dazu vorgesehen sind, die Kabelbinder aufzunehmen, und die in der Längsrichtung ausgerichtet sind, wobei die Schlitze (12) jeweils im wesentlichen U-förmig sind, wobei zwei im wesentlichen geradlinige Seitenarme (12a) durch ein gebogenes Teilstück (12b) miteinander verbunden sind und die beiden Seitenarme jedes Schlitzes sich im wesentlichen parallel zur Längsrichtung (X) erstrecken, wobei jeder Schlitz auf diese Weise einen Einhängefinger (13) abgrenzt, der sich zwischen einem ersten Ende (14), das von dem gebogenen Teilstück (12b) des U-förmigen Schlitzes entfernt liegt, und einem zweiten Ende (15) im Bereich dieses gebogenen Teilstücks im wesentlichen parallel zur Längsrichtung (X) erstreckt.

6. Kabelträger (1) nach Anspruch 5, bei dem der Boden (2) des Profilteils zusätzlich zu den U-förmigen Schlitzen (12) nebeneinander liegende Längslöcher (22) aufweist, die sich parallel zur Längsrichtung (X) erstrecken.

7. Kabelträger (1) nach einem der vorherigen Ansprüche, bei dem jeder Einhängefinger (13) eine Breite (e) aufweist, die, senkrecht zur Längsrichtung (X) gemessen, zwischen 0,5 und 2 cm beträgt, wobei die U-förmigen Schlitze (12) jeweils eine Breite von 2 bis 5 mm aufweisen.

8. Kabelträger (1) nach einem der vorherigen Ansprüche, bei dem die Schlitze (12) und die entsprechenden Einhängefinger (13) in mindestens einer Gruppe von Reihen mit einer ersten und einer zweiten quer verlaufenden Reihe (19, 20) verteilt angeordnet sind, wobei sich die Einhängefinger (13) der beiden Reihen der gleichen Gruppe von ihrem ersten Ende (14) zu ihrem zweiten Ende (15) hin erstrecken, das sich in entgegengesetzter Richtung zu dem der anderen Reihe dieser Gruppe befindet, und wobei die Einhängefinger der ersten Reihe gegenüber den Einhängefingern der zweiten Reihe in einer Querrichtung (Y), die senkrecht zur Längsrichtung (X) liegt, verschoben sind.

9. Kabelträger (1) nach Anspruch 8, bei dem die Einhängefinger (13) jeder Reihe (19, 20) in gleichmäßigen Abständen mit einem Schritt (P) in der Querrichtung (Y) angeordnet sind, wobei diese Einhängefinger von einer Reihe zur anderen um einen Abstand P/2 zueinander verschoben sind.

10. Kabelrinne, die zum einen ein Profilteil (3) mit U-förmigem Querschnitt, das einen Boden (2) und zwei Längsseitenwände (4) aufweist, die eine Rinne bilden, und zum anderen mehrere Kabelträger (1) nach einem der Ansprüche 1 bis 4, die innerhalb der Rinne angeordnet sind, wobei die Befestigungswand (7) jedes dieser Kabelträger am Boden (2) des Profilteils befestigt ist, umfaßt.

## Claims

1. A mounting (1) for securing electric cables (17) by means of cable ties (18), this mounting being constituted by folded and cut out metal sheet which comprises at least:
- a fixing face (7) which has an underside (10b) for fixing to a supporting surface,
- and an attachment portion (10) comprising a number of slots (12), placed side by side, to take the cable ties and oriented in the same lengthwise direction (X), the attachment portion (10) being connected to the fixing face (7) by a cranked portion forming a shelf,
the slots (12) each being approximately U-shaped, with two side arms (12a), approximately straight, connected to each other by a curved section (12b), the two side arms of each slot running approximately parallel to the lengthwise direction (X), each slot thus delimiting an attachment tongue (13) which runs approximately parallel to the lengthwise direction (X) between a first end (14) remote from the curved section (12b) of the U-shaped slot and a second end (15) at this curved section.

2. A mounting (1) according to claim 1, in which the attachment portion (10) and the fixing face (7) run parallel to the lengthwise direction (X), the attachment portion having an underside (10b) which is situated at a certain height (H) above a straight line (16) termed the baseline, parallel to the lengthwise direction (X) and running along the underside of the fixing face (7).

3. A mounting according to claim 2, in which the attachment portion (10) runs in the opposite direction to the fixing face (7) from the cranked portion (9) onwards.

4. A mounting according to either one of claims 2 and 3, in which the height (H) between the underside (10b) of the attachment portion and the baseline is less than 1 cm.

5. A mounting for securing electric cables (17) by means of cable ties, consisting in a U-section channel (3) which runs in a lengthwise direction (X) and which has a base (2) and two lengthwise side walls (4), at least the base (2) of the channel comprising a number of slots (12), placed side by side, to take the cable ties and oriented in a lengthwise direction, the slots (12) each being approximately U-shaped, with two side arms (12a), approximately straight, connected to each other by a curved section (12b), the two side arms of each slot running approximately parallel to the lengthwise direction (X), each slot thus delimiting an attachment tongue (13) which runs approximately parallel to the lengthwise direction (X) between a first end (14) remote from the curved section (12b) of the U-shaped slot and a second end (15) at this curved section.

6. A mounting according to claim 5, in which the base (2) of the channel comprises, in addition to the U-shaped slots (12), oblong holes (22) placed side by side and running parallel to the lengthwise direction (X).

7. A mounting according to any one of the previous claims, in which each attachment tongue (13) has a width (e) which, measured perpendicularly to the lengthwise direction (X), is between 0.5 and 2 cm, the U-shaped slots (12) each having a width of between 2 and 5 mm.

8. A mounting according to any one of the above claims, in which the slots (12) and corresponding attachment tongues (13) are distributed in at least one group of rows comprising adjacent transverse first and second rows (19, 20), the attachment tongues (13) of the two rows of the same group running from their first end (14) to their second end (15) in the opposite direction to the other of these two rows, and the attachment tongues of the first row being staggered with respect to the attachment tongues of the second row in a transverse direction (Y) perpendicular to the lengthwise direction (X).

9. A mounting according to claim 8, in which the attachment tongues (13) of each row (19, 20) are arranged at regular intervals in a transverse direction (Y) at a pitch P, these attachment tongues being staggered by a distance P/2 from one row to the other.

10. A cable duct comprising, firstly, a U-section channel (3) which has a base (2) and two lengthwise side walls (4) forming a trough, and secondly, a number of mountings (1) according to any one of claims 1 to 4, arranged inside the trough, the fixing face (7) of each of these mountings being attached to the base (2) of the channel.
